# EUROPEAN PATENT SPECIFICATION

(11) **EP 1 833 255 B1**
(45) Date of publication and mention of the grant of the patent: **28.11.2012**
(21) Application number: 07000181.3
(22) Date of filing: 05.01.2007
(51) Int. Cl.: H04N 7/173, H04N 5/445

(54) **Viewing/listening restriction apparatus and method for digital broadcast**
Gerät und Verfahren zur Ansichts-/Höreinschränkung für digitalen Rundfunk
Procédé de contrôle du blocage de l'affichage/écoute d'une diffusion numérique et dispositif correspondant

(30) Priority: 08.03.2006 KR 20060021778
(43) Date of publication of application: 12.09.2007
(73) Proprietor: Samsung Electronics Co., Ltd., Suwon-si, Gyeonggi-do, 443-742 (KR)
(72) Inventor: Lee, Yeon Ju, Suwon-si, Gyeonggi-do (KR); Yoon, Sang Hyeon, Suwon-si, Gyeonggi-do (KR)
(74) Representative: Harrison Goddard Foote

(56) References cited:
- WO-A-00/27122
- WO-A-02/01864

## Description

### BACKGROUND OF THE INVENTION

### 1. Field of the Invention

The present invention relates generally to digital broadcasting and, more particularly, to a viewing and listening restriction apparatus and method for digital broadcast.

### 2. Description of the Related Art

In digital multimedia broadcasting (DMB), various multimedia signals including audio and video are digitally modulated and delivered to users. Particularly, users in motion can receive various multimedia programs through portable or in-vehicle receivers equipped with an omni-directional receiving antenna.

Advances in memories capable of storing vast amounts of digital multimedia data such as moving pictures and music videos, and popularization of mobile communication terminals, have enabled recent development and commercialization of mobile communication terminals having DMB reception capabilities, such as DMB phones.

A user can receive DMB programs through a DMB phone while in motion. As such, a user in motion can readily carry a DMB phone and enjoy favorite DMB programs at almost any time and place.

Of particular note, there has been an increasing amount of youths who are carrying DMB phones, for such applications as viewing educational programs. However, unrestricted viewing/listening to DMB programs may be harmful to adolescents. For example, adolescents who view/listen to DMB programs in an uncontrolled manner may waste time and be exposed to programs that are not befitting of youth viewing. Consequently, it is desirable to provide viewing/listening restriction functions for broadcast in DMB phones for youths.

Document WO-A-0201864 discloses a method for controlling the use of a media content delivering apparatus eg. a receiver apparatus, such as a television receiver, integrated receiver decoder, or computer connected to the Internet, or a storage apparatus, such as a computer or a loaded optical disc player, provided with a parental control system. The method comprises the steps of sending a request to unlock a particular media content, eg. channels, individual programs, movies, website content, computer files, and the like, of interest to a user of the apparatus, said media content being locked by said parental control system, to a remotely located communication device; and unlocking said particular media content in dependence on receiving an affirmative answer to said request from said communication device.

### SUMMERY OF THE INVENTION

The present invention has been made in view of the above problems, and an object of the present invention is to provide a viewing/listening restriction apparatus and method for digital broadcast wherein viewing/listening restriction can be applied to a digital multimedia broadcasting (DMB) phone by blocking broadcast viewing/listening of the DMB phone on the basis of preset conditions.

Another object of the present invention is to provide a viewing/listening restriction apparatus and method for digital broadcast wherein broadcast operation of a DMB phone can be blocked by another person other than the user of the DMB phone.

Another object of the present invention is to provide a viewing/listening restriction apparatus and method for digital broadcast wherein broadcast operation of a DMB phone can be remotely controlled through a mobile communication network.

In accordance with the present invention, there is provided a viewing/listening restriction method for digital broadcast in a digital broadcast receiver, the method being as defined by claim 1.

In accordance with the present invention, there is also provided a digital broadcast receiver as defined by claim 23.

### BRIEF DESCRIPTION OF THE DRAWINGS

The above and other objects, features and advantages of the present invention will be more apparent from the following detailed description in conjunction with the accompanying drawings, in which:
FIG. 1 illustrates the configuration of a digital broadcast receiver according to the present invention;
FIGS. 2A to 2C illustrate structures of databases for managing viewing/listening restriction information in the digital broadcast receiver of FIG. 1;
FIG. 3 is a flow chart illustrating a viewing/listening restriction method according to background art;
FIGS. 4A to 4C are flow charts illustrating steps of a viewing/listening restriction method according to background art;
FIGS. 5A to 5B are flow diagrams illustrating a viewing/listening restriction method according to an embodiment of the present invention;
FIGS. 6A to 6C illustrate structures of messages exchanged to perform operations necessary for the viewing/listening restriction method of FIGS. 5A to 5B;
FIG. 7 illustrates the configuration of a mobile communication terminal ; and
FIGS. 8A to 8N are display screens illustrating steps to remotely control operation of digital multimedia broadcasting using the mobile communication terminal of FIG. 7.

### DETAILED DESCRIPTION OF THE PREFERRED EMBODIMENTS

Hereinafter, preferred embodiments of the present invention are described in detail with reference to the accompanying drawings. The same reference symbols identify the same or corresponding elements in the drawings. Some constructions or processes known in the art are not described for the sake of clarity and conciseness.

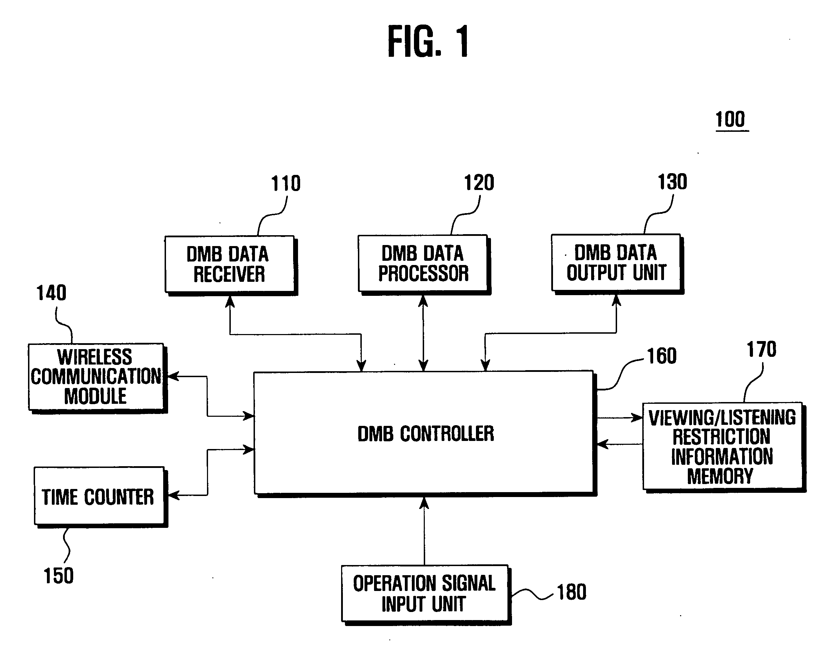

FIG. 1 illustrates the configuration of a digital broadcast receiver according to the present invention. Referring to FIG. 1, the digital broadcast receiver 100 includes a DMB data receiver 110, a DMB data processor 120, a DMB data output unit 130, a wireless communication module 140, a time counter 150, a DMB controller 160, a viewing/listening restriction information memory 170 and an operation signal input unit 180.

The DMB data receiver 110 receives DMB data by selectively tuning to, for example, a code division multiplexing (CDM) channel according to user selections. The DMB data receiver 110 preferably includes an omni-directional antenna.

The DMB data processor 120 processes the DMB data received by the DMB data receiver 110, and sends the processed DMB data to the DMB data output unit 130. For example, the DMB data processor 120 detects MPEG-4 coded data from the DMB data received in the form of a Moving Picture Experts Group 2 (MPEG-2) transport stream, and decodes digital audio data and digital video data to output the data. To this end, the DMB data processor 120 preferably includes a TS demultiplexer, audio/video buffer and A/V codec.

The DMB data processor 120 also detects a program identifier (PID) in the received DMB data and sends the detected PID to the DMB controller 160.

The DMB data output unit 130 outputs data processed by the DMB data processor 120, and preferably includes a speaker for outputting audio data and a display section for outputting video data.

The wireless communication module 140 provides a communication interface to wireless communication networks.

The time counter 150 counts time, and sends the count result to the DMB controller 160.

The DMB controller 160 controls DMB operation of the digital broadcast receiver 100 according to executable programs set in advance or user commands through the operation signal input unit 180. For example, the DMB controller 160 applies viewing/listening restriction to the digital broadcast receiver 100 on the basis of viewing/listening restriction information (for example, time intervals and programs to be restricted) pre-stored in the viewing/listening restriction information memory 170. When information on a program to be viewing/listening-restricted is input from the operation signal input unit 180, the DMB controller 160 stores the information in the viewing/listening restriction information memory 170. In particular, when the DMB user selects the current program, the DMB controller 160 preferably detects the PID of DMB data currently being played, and inserts the detected PID into a list of viewing/listening-restricted PIDs. The PID is detected from an electronic program guide (EPG) of current programs.

The DMB controller 160 also controls DMB operation of the digital broadcast receiver 100 according to a control message (for example, a text message) received through the wireless communication module 140, or a control command transmitted from a remote site. The wireless communication module 140 receives a control message containing a control command and related authentication information, transmits the control message to the DMB controller 160 and the viewing/listening restriction information memory 170 pre-stores authentication information of the user authorized to control DMB operations of the digital broadcast receiver 100. In this case, the DMB controller 160 compares the authentication information contained in the control message with that stored in the viewing/listening restriction information memory 170, and performs, if they are identical, the control command (for example, a DMB reception on or off command) contained in the control message.

When a password change message containing related authentication information, an old password and a new password, is received through the wireless communication module 140, the DMB controller 160 changes a password for operation control on the basis of the password change message. The DMB controller 160 determines whether the corresponding user possesses the authority to change the password by the authentication information contained in the password change message. If the user possesses the authority to change the password, the DMB controller 160 compares the old password contained in the password change message with the pre-stored password. If they are identical, the DMB controller 160 preferably replaces the pre-stored password with the new password contained in the password change message.

The viewing/listening restriction information memory 170 stores viewing/listening restriction information necessary to control viewing/listening restriction functions applicable to the digital broadcast receiver 100. For example, the viewing/listening restriction information memory 170 stores a list of time intervals to be viewing/listening-restricted, a list of programs to be viewing/listening-restricted, and authentication information to certify control messages from a remote site.

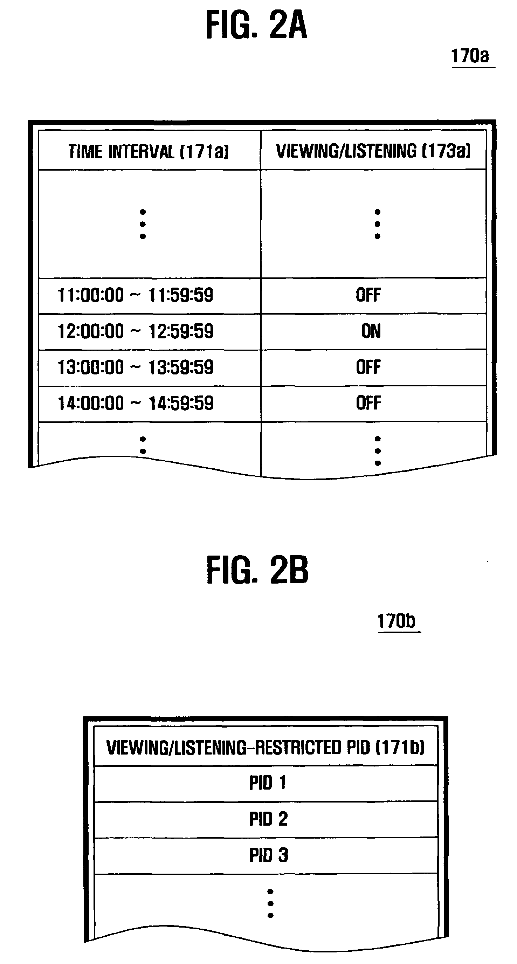

FIGS. 2A to 2C illustrate structures of records in databases to maintain the viewing/listening restriction information. The databases are stored in the viewing/listening restriction information memory 170, and are described later in relation to FIGS. 2A to 2C.

The operation signal input unit 180 inputs a user command and sends the command to the DMB controller 160. The digital broadcast receiver 100 of FIG. 1 registers and updates items of the viewing/listening restriction information according to user selections through the operation signal input unit 180.

The digital broadcast receiver 100 must verify that an input command is issued by a user who is authorized to manage the viewing/listening restriction information. To this end, the digital broadcast receiver 100 pre-stores authentication information (for example, a password) for verifying authorization to manage the viewing/listening restriction information. Setting or changing the password may be performed in a manner similar to that of a conventional electric device or using a text message. In particular, a password change using a text message is performed upon reception of a password change message containing related authentication information, an old password and a new password. Only if the authentication information and old password contained in the message are identical to, respectively, authentication information and a password pre-stored in the digital broadcast receiver 100, is the pre-stored password replaced with the new password.

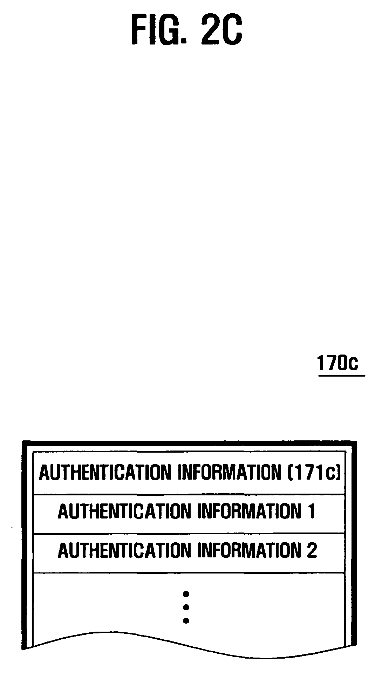

FIGS. 2A to 2C illustrate structures of databases for managing the viewing/listening restriction information in the digital broadcast receiver 100 of FIG. 1. FIG. 2A illustrates records of a time database 170a to manage time intervals to be viewing/listening-restricted, FIG. 2B illustrates records of a program database 170b to manage a list of programs to be viewing/listening-restricted, and FIG. 2C illustrates records of an authentication database 170C to manage authentication information for viewing/listening restriction.

Referring to FIG. 2A, each record of the time database 170a includes a time interval field 171a and viewing/listening field 173a, and is used to store information regarding application of viewing/listening restriction on a time interval basis. FIG. 2A illustrates that DMB viewing/listening is allowed only for a time interval from 12:00:00 to 12:59:59.

Referring to FIG. 1 and FIG. 2A, the DMB controller 160 allows broadcast operation only if the current time from the time counter 150 is within the time interval of 12:00:00 to 12:59:59. That is, the DMB controller 160 activates the DMB data receiver 110, DMB data processor 120 and DMB data output unit 130 only if the current time is within the time interval of 12:00:00 to 12:59:59.

Viewing/listening restriction time intervals are preferably input through the operation signal input unit 180.

Referring to FIG. 2B, each record of the program database 170b includes a PID field 171b, and is used to store and manage the PID of a program to be viewing/listening-restricted according to user requests.

When such information on viewing/listening-restricted programs is stored in the viewing/listening restriction information memory 170, the DMB controller 160 receives the PID of a currently played program from the DMB data processor 120, and blocks reception and/or output of DMB data if the PID is contained in records of the program database 170b.

If the user inputs information on a program to be viewing/listening-restricted through the operation signal input unit 180, the DMB controller 160 stores the information in the viewing/listening restriction information memory 170. In particular, the DMB controller 160 searches the electronic program guide (EPG) using the information on the program to find a corresponding PID of the program, and inserts the found PID into the program database 170b.

Referring to FIG. 2C, the authentication database 170c preferably includes one or more records, each containing authentication information for DMB viewing/listening restriction.

When such authentication information is stored in the viewing/listening restriction information memory 170, the DMB controller 160 analyzes a message received through the wireless communication module 140, extracts authentication information from the message, and compares the extracted authentication information with the corresponding authentication information of the authentication database 170c stored in the viewing/listening restriction information memory 170. The DMB controller 160 performs a requested operation such as a DMB operation mode control or password change only when the extracted and stored authentication information is identical. The DMB controller 160 controls the DMB operation mode and changes a password for the DMB operation control in response to a DMB operation mode control command from a remote site.

The viewing/listening restriction information memory 170 stores and manages one or more of the time database 170a, program database 170b and authentication database 170c. For example, the viewing/listening restriction information memory 170 stores both the time database 170a and program database 170b, and applies a viewing/listening restriction to a particular program during a time interval.

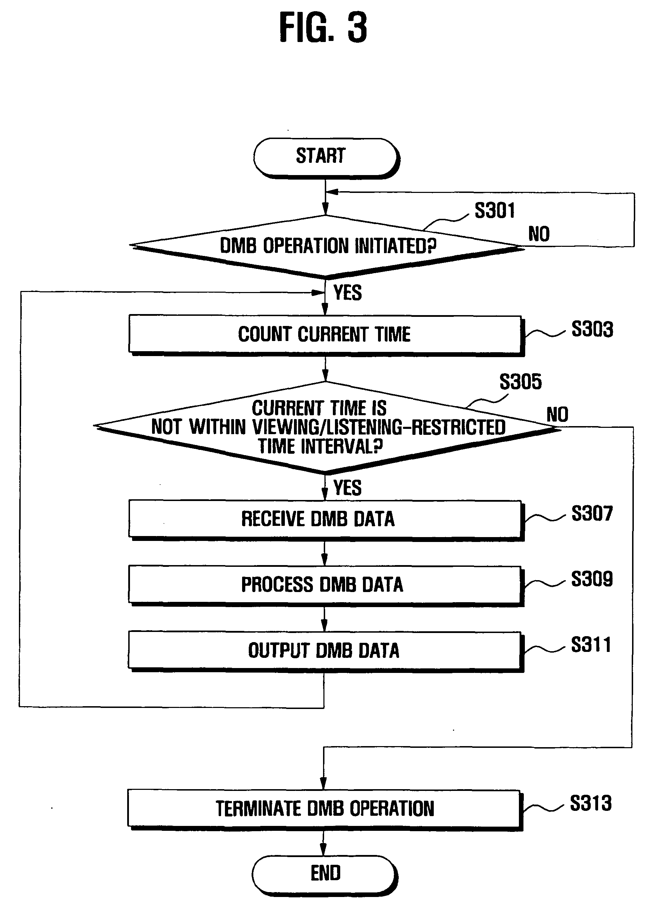

FIG. 3 is a flow chart illustrating a viewing/listening restriction method according to background art. In the method, viewing/listening restriction is applied on the basis of preset time intervals, which are similar to those illustrated in the time database 170a of FIG. 2A stored in the viewing/listening restriction information memory 170 in FIG. 1.

Referring to FIG. 1 and FIG. 3, when DMB operation of the digital broadcast receiver 100 is initiated (S301), the time counter 150 counts the current time to determine whether a current time is a stored viewing/listening restriction time (S303).

The digital broadcast receiver 100 determines whether the current time is within a set viewing/listening-restricted time interval (S305). If the current time is not within any set viewing/listening-restricted time interval, the digital broadcast receiver 100 receives DMB data (S307), processes the received DMB data (S309), and outputs the processed DMB data (S311). That is, the DMB controller 160 controls the DMB data receiver 110, DMB data processor 120, and DMB data output unit 130 to perform steps S307 to S311.

If the current time is within a set viewing/listening-restricted time interval, the digital broadcast receiver 100 terminates the DMB operation (S313) by deactivating the DMB data receiver 110, DMB data processor 120 and DMB data output unit 130.

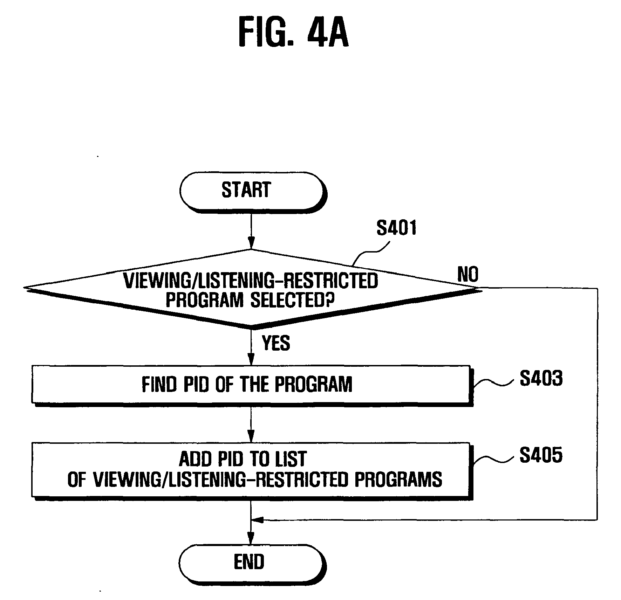

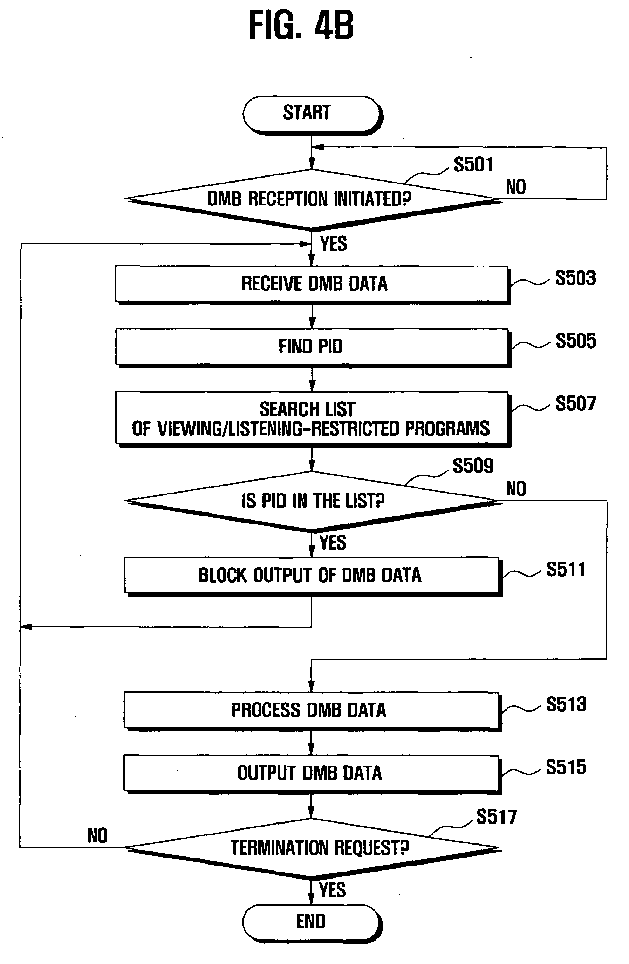

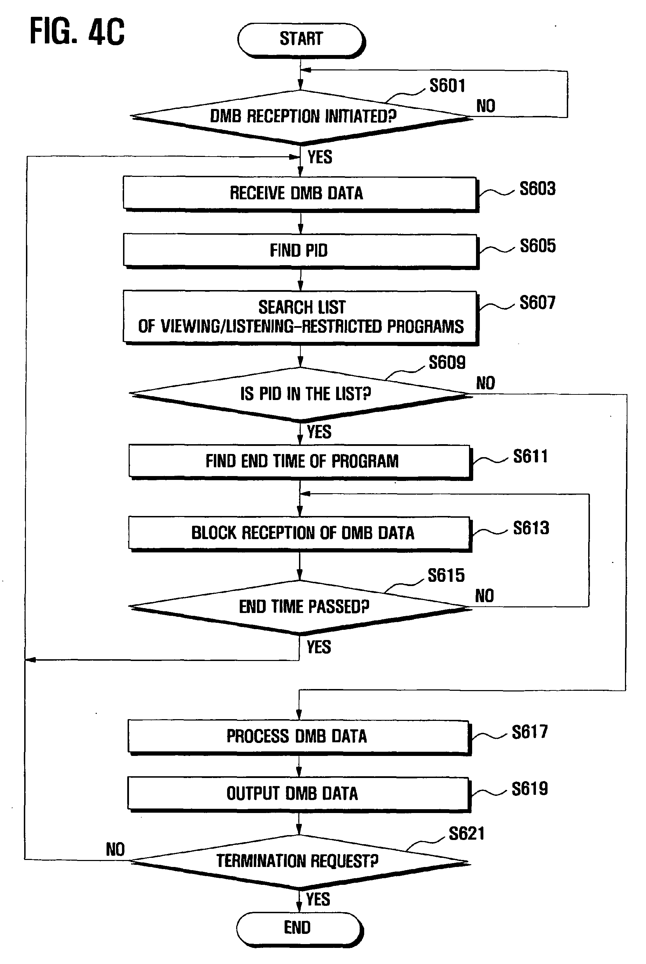

FIGS. 4A to 4C are flow charts illustrating a viewing/listening restriction method according to background art. In particular, FIG. 4A illustrates registering a program to be viewing/listening-restricted, FIG. 4B illustrates blocking output of a viewing/listening-restricted program, and FIG. 4C illustrates blocking reception of a viewing/listening-restricted program.

Referring to FIG. 1 and FIG. 4A, registering a program to be viewing/listening-restricted in the digital broadcast receiver 100 is performed as follows. When an authorized user selects a program to be viewing/listening-restricted (S401), the digital broadcast receiver 100 finds the PID of the selected program (S403), and adds the PID to a list of viewing/listening-restricted programs (S405). That is, when the authorized user selects a program to be viewing/listening-restricted through the operation signal input unit 180, the DMB controller 160 searches the EPG to find the PID of the selected program, and adds the PID to the viewing/listening restriction information memory 170.

Referring to FIG. 1 and FIG. 4B, the viewing/listening restriction method described below blocks output of DMB data on the basis of a list of viewing/listening-restricted programs.

When broadcast operation of the digital broadcast receiver 100 is initiated (S501), the digital broadcast receiver 100 receives DMB data (S503), finds the PID of the DMB data (S505), searches the list of viewing/listening-restricted programs using the PID (S507) and determines whether the PID exists in the list (S509).

If the PID found at step S505 exists in the list of viewing/listening-restricted programs as a result of searching at step S507, the digital broadcast receiver 100 blocks output of the DMB data (S511). Additionally, output of DMB data is blocked until a PID not in the list is found. To this end, the DMB controller 160 controls an operation of the DMB data output unit 130.

If the PID found at step S505 does not exist in the list of viewing/listening-restricted programs, the digital broadcast receiver 100 processes the DMB data received at step S503 (S513) and outputs the processed DMB data (S515).

The above steps S503 to S515 are repeated until a termination request of broadcast operation is input.

Referring to FIG. 1 and FIG. 4C, the viewing/listening restriction method blocks reception of DMB data on the basis of the list of viewing/listening-restricted programs.

When DMB operation of the digital broadcast receiver 100 is initiated (S601), the digital broadcast receiver 100 receives DMB data (S603), finds the PID of the DMB data (S605), searches the list of viewing/listening-restricted programs using the PID (S607) and determines whether the PID exists in the list (S609).

If the PID found at step S605 exists in the list of viewing/listening-restricted programs as a result of searching at step S607, the digital broadcast receiver 100 finds the end time of a program associated with the PID using a pre-stored EPG (S611), and blocks reception of DMB data until the end time of the program (S613). If the end time passes (S615), the digital broadcast receiver 100 unblocks reception of DMB data.

That is, the DMB controller 160 receives the PID of DMB data currently being played from the DMB data processor 120, finds, if the PID is registered in the viewing/listening restriction information memory 170, the end time of a program associated with the PID using the pre-stored EPG, blocks an operation of the DMB data receiver 110, and later unblocks the operation of the DMB data receiver 110 when the end time passes.

If the PID found at step S605 does not exist in the list of viewing/listening-restricted programs, the digital broadcast receiver 100 processes the DMB data received at step S603 (S617), and outputs the processed DMB data (S619).

The above steps S603 to S619 are repeated until a termination request of broadcast operation is input.

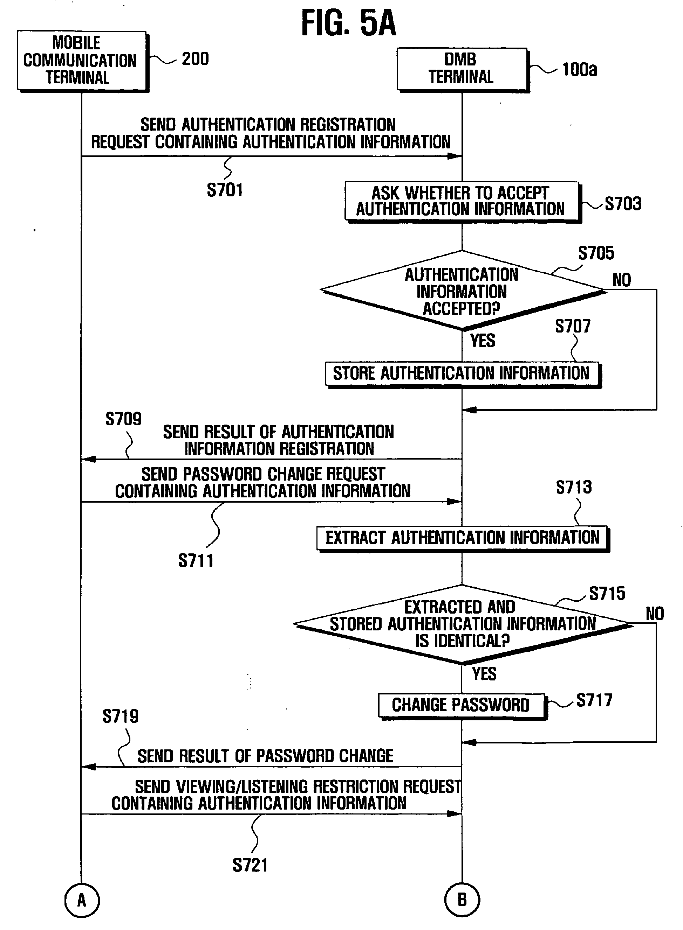

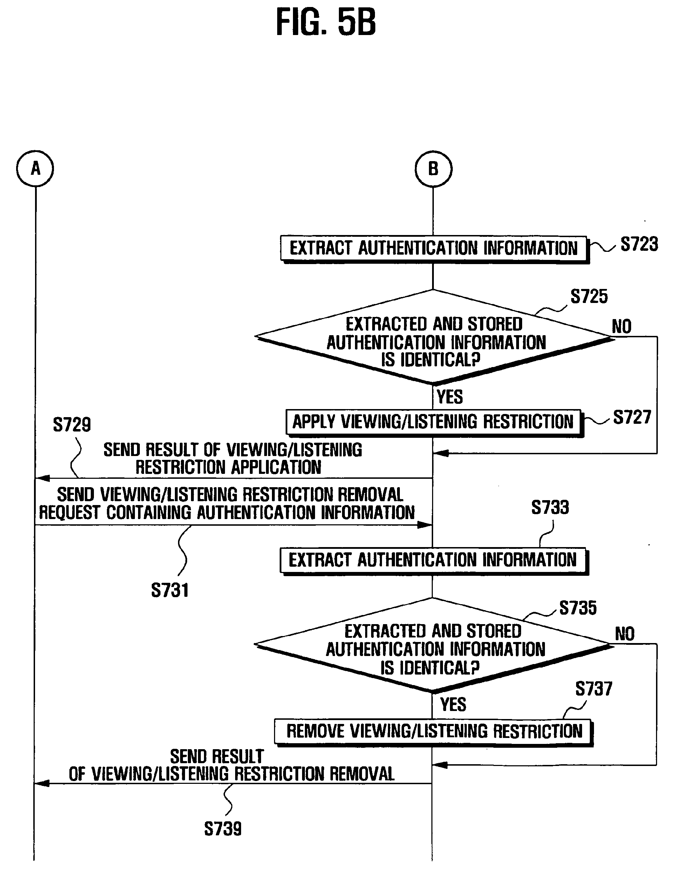

FIGS. 5A to 5B are flow diagrams illustrating a viewing/listening restriction method according to an embodiment of the present invention. In FIGS. 5A to 5B, DMB operation of a DMB terminal 100a is remotely controlled by a mobile communication terminal 200 via a mobile communication network. The mobile communication terminal 200 may have a DMB receiving capability.

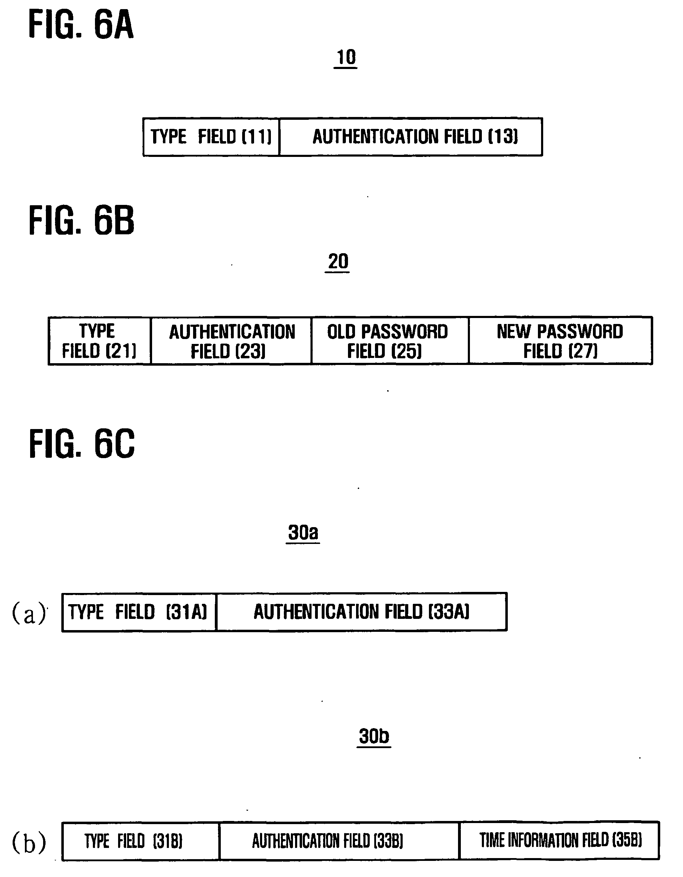

The mobile communication terminal 200 requests the DMB terminal 100a to register authentication information for DMB operation mode control (S701), by sending a request message containing the authentication information to be registered to the DMB terminal 100a. A format of such a request message is illustrated in FIG. 6A, in which the request message includes a type field 11 representing the type of the message, and an authentication field 13 for storing authentication information. The authentication information is one of a phone number or identification number of the mobile communication terminal 200 or a password given by the user of the mobile communication terminal 200.

In return, the DMB terminal 100a informs the user thereof of the request message 10 containing authentication information (S703) to ask the user whether to accept the authentication information. If the user accepts the authentication information (S705), the DMB terminal 100a stores the authentication information transmitted from the mobile communication terminal 200 (S707). The DMB terminal 100a then sends a result of the authentication information registration to the mobile communication terminal 200 (S709).

After this initialization for remote control of the DMB operation, the DMB terminal 100a awaits a control command from the mobile communication terminal 200.

When the user requests a password change for DMB operation of the DMB terminal 100a, the mobile communication terminal 200 creates a password change message, which contains the authentication information registered at steps S701 to S709 in the DMB terminal 100a, and sends the password change message to the DMB terminal 100a (S711). A format of such a password change message is illustrated in FIG. 6B, in which the password change message 20 includes a type field 21 representing the type of the message, an authentication field 23 storing authentication information, an old password field 25 storing a password before change and a new password field 27 storing a password after change. The authentication information is registered at steps S701 to S709 in the DMB terminal 100a.

The DMB terminal 100a extracts authentication information from the received password change message (S713), and determines whether the extracted authentication information is identical to that stored at step S707 (S715) to verify that the user sending the password change message has the right to change the password.

If the extracted authentication information is identical, indicating that the user sending the password change message has the authority to change the password, the DMB terminal 100a performs a password change operation (S717). That is, the DMB terminal 100a determines whether the old password contained in the password change message is identical to a pre-stored password, and replaces, if identical, the pre-stored password with the new password contained in the password change message. The DMB terminal 100a sends a result of the password change operation to the mobile communication terminal 200(S719).

When the user requests application of viewing/listening restriction to the DMB terminal 100a, the mobile communication terminal 200 creates a viewing/listening restriction message containing the authentication information registered at steps S701 to S709 in the DMB terminal 100a, and sends the viewing/listening restriction message to the DMB terminal 100a (S721). Formats of such a viewing/listening restriction message are illustrated in FIG. 6C. An ordinary viewing/listening restriction message 30a is illustrated in FIG. 6C(a), and a viewing/listening restriction message 30b containing a time interval is illustrated in FIG. 6C(b). Referring to FIG. 6C(a), an ordinary viewing/listening restriction message 30a includes a type field 31A representing the type of the message, and an authentication field 33A storing authentication information. Referring to FIG. 6C(b), a viewing/listening restriction message 30b includes a type field 31B representing the type of the message, an authentication field 33B and a time information field 35B storing time information indicating when to apply viewing/listening restriction to the DMB terminal 100a. At the time information field 35B, information to apply a viewing/listening restriction immediately upon reception of the viewing/listening restriction message, information on time to wait for a predetermined time till a viewing/listening restriction is applied after reception of the viewing/listening restriction message, or information on a specified time to apply a viewing/listening restriction is stored.

The DMB terminal 100a extracts authentication information from the received viewing/listening restriction message (S723), and determines whether the extracted authentication information is identical to that stored at step S707 (S725) to verify that the user sending the viewing/listening restriction message has the authority to apply the viewing/listening restriction.

If the extracted authentication information is identical to the stored authentication information, indicating that the user sending the viewing/listening restriction message has the authority to apply viewing/listening restriction, the DMB terminal 100a performs a requested viewing/listening restriction operation (S727). If time information is contained in the viewing/listening restriction message, the DMB terminal 100a performs a viewing/listening restriction operation on the basis of the time information. For example, if the time information indicates immediate application of viewing/listening restriction, the DMB terminal 100a blocks output or reception of DMB data immediately upon reception of the viewing/listening restriction message. If the time information indicates delayed application of viewing/listening restriction, the DMB terminal 100a blocks output or reception of DMB data at a delayed time after reception of the viewing/listening restriction message. If the time information indicates application of viewing/listening restriction at a specified time, the DMB terminal 100a blocks output or reception of DMB data at the specified time. The DMB terminal 100a then sends a result of the viewing/listening restriction application to the mobile communication terminal 200 (S729).

When the user requests removal of viewing/listening restriction from the DMB terminal 100a, the mobile communication terminal 200 creates a viewing/listening restriction removal message, and sends it to the DMB terminal 100a (S731). In return, the DMB terminal 100a performs a series of steps S733, S735 and S737 for viewing/listening restriction removal. Steps S733, S735 and S737 are similar to steps S723, S725 and S727 for viewing/listening restriction application.

That is, the DMB terminal 100a extracts authentication information from the received viewing/listening restriction removal message (S733), and determines whether the extracted authentication information is identical to that stored at step S707 (S735). If the extracted authentication information is identical, indicating that the user sending the viewing/listening restriction removal message has the authority to remove viewing/listening restriction, the DMB terminal 100a performs a requested viewing/listening restriction removal operation (S737). If removal time information is contained in the viewing/listening restriction removal message, the DMB terminal 100a performs viewing/listening restriction removal on the basis of the removal time information. The type of removal time information is similar to the type of the time information for viewing/listening restriction application. Hence, processing of the removal time information by the DMB terminal 100a is similar to that of the application time information. That is, if the removal time information indicates immediate removal of viewing/listening restriction, the DMB terminal 100a unblocks output or reception of DMB data immediately upon reception of the viewing/listening restriction removal message. If the removal time information indicates delayed removal of viewing/listening restriction, the DMB terminal 100a unblocks output or reception of DMB data at a delayed time after reception of the viewing/listening restriction removal message. If the removal time information indicates removal of viewing/listening restriction at a specified time, the DMB terminal 100a unblocks output or reception of DMB data at the specified time. The DMB terminal 100a then sends a result of the viewing/listening restriction removal to the mobile communication terminal 200 (S739).

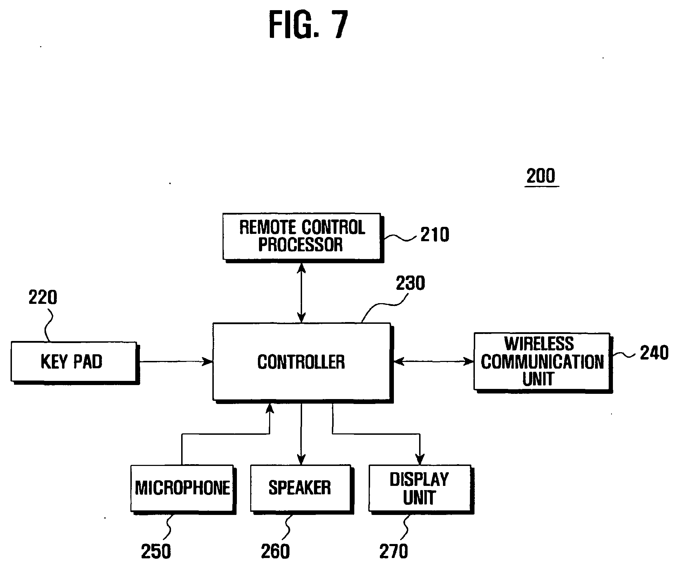

FIG. 7 shows the configuration of the mobile communication terminal 200 according to the present invention. Referring to FIG. 7, the mobile communication terminal 200 includes a remote control processor 210, a keypad 220, a controller 230, a wireless communication unit 240, a microphone 250, a speaker 260 and a display unit 270.

The remote control processor 210 remotely controls a DMB-related operation of an external appliance via a wireless communication network. The remote control processor 210 registers in advance a DMB appliance to be controlled, and controls the registered DMB appliance corresponding to a user selection. For example, the remote control processor 210 creates a message containing a viewing/listening restriction command or viewing/listening restriction removal command, and sends the created message to the DMB appliance through the wireless communication unit 240.

The keypad 220 provides a user interface for inputting a user command to control an operation of the mobile communication terminal 200. In particular, the keypad 220 receives a user input for remote control of the DMB appliance, and transmits the user input to the controller 230. To control DMB operation of the DMB appliance, the keypad 220 receives a user input for changing a password stored in the DMB appliance, and transmits the user input to the controller 230. The keypad 220 also receives a user input for application/removal of viewing/listening restriction to/from the DMB appliance, and transmits the user input to the controller 230. The keypad 220 preferably includes a remote control key for remote control of the DMB appliance.

The controller 230 controls the operation of the mobile communication terminal 200 in response to user inputs from the keypad 220 or through executable programs pre-stored in a memory (not shown). In particular, upon reception of a user input through the keypad 220 to control the DMB appliance, the controller 230 controls the remote control processor 210 according to the user input. For example, to control broadcast operation of the DMB appliance, the controller 230 controls the remote control processor 210 to create a password change message, corresponding to a user input for changing a password stored in the DMB appliance. The controller 230 also controls the remote control processor 210 to create messages requesting application/removal of viewing/listening restriction corresponding to user inputs for application/removal of viewing/listening restriction of the DMB appliance. The messages include authentication information that is verified in advance for remote control between the mobile communication terminal 200 and DMB appliance. The controller 230 pre-stores the authentication information or asks the user for authentication information as needed. The controller 230 provides the authentication information to the remote control processor 210, which then inserts the authentication information into messages to be created (for example, a password change message, viewing/listening restriction message and viewing/listening restriction removal message).

The wireless communication unit 240 provides a communication interface to a wireless communication network. For example, the wireless communication unit 240 transmits through wireless communication a password change message, viewing/listening restriction message and viewing/listening restriction removal message created by the remote control processor 210 to the DMB appliance under the control of the controller 230.

The microphone 250 receives an acoustic signal such as voice from the surrounding environment, and transmits the acoustic signal to the controller 230. The speaker 260 outputs the acoustic signal from the controller 230. The display unit 270 displays image information from the controller 230.

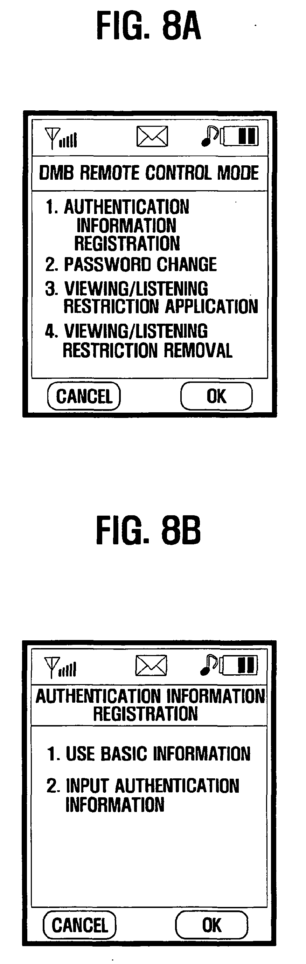

FIGS. 8A to 8N are display screens illustrating remote control of broadcast operation of a DMB appliance using the mobile communication terminal of FIG. 7.

FIG. 8A illustrates a start screen in a DMB remote control mode of the mobile communication terminal to control the DMB appliance. Referring to FIG. 8A, the start screen in the DMB remote control mode includes a list of menu items ('authentication information registration', 'password change', 'viewing/listening restriction application', and 'viewing/listening restriction removal') selectable for remote control of the DMB appliance.

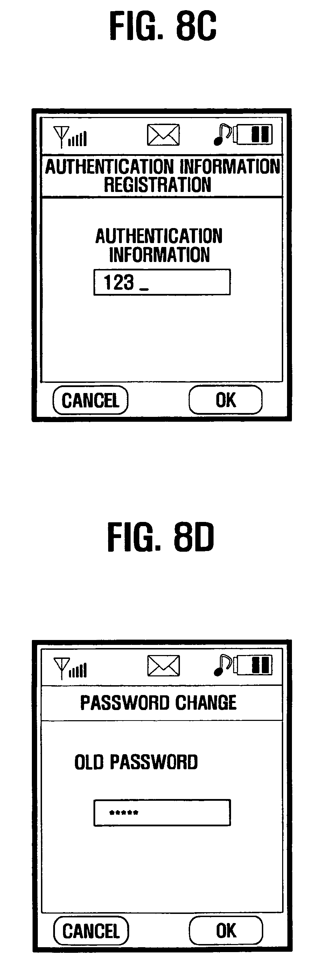

FIGS. 8B and 8C illustrate display screens after selection of the menu item 'authentication information registration' in FIG. 8A. FIG. 8B illustrates methods to register authentication information, and FIG. 8C illustrates an input window for inputting authentication information after selection of a menu item of 'input authentication information' in FIG. 8B.

If the user selects a menu item of 'use basic information' in FIG. 8B, the mobile communication terminal sets pre-stored information such as a phone number or identification number thereof as the authentication information.

When the 'OK' key is pressed after setting the authentication information, the mobile communication terminal creates a registration message containing the authentication information, and sends the registration message to the DMB appliance to be remotely controlled. The mobile communication terminal also stores the authentication information for future use in the remote control mode.

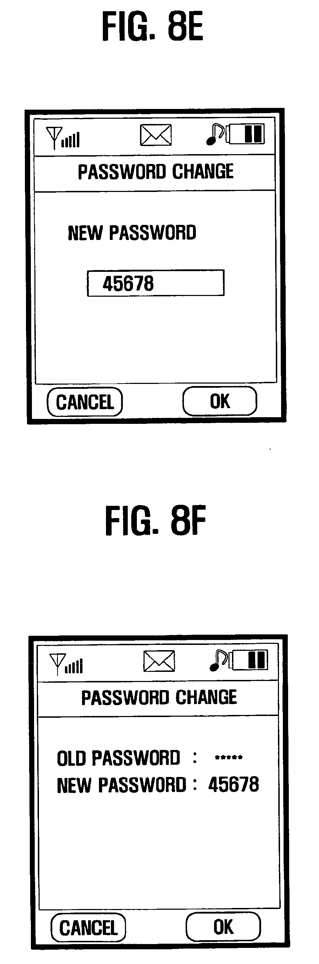

FIGS. 8D to 8F illustrate display screens of the mobile communication terminal after selection of the menu item 'password change' in FIG. 8A to change a password in the remote-controlled DMB appliance. Referring to FIGS. 8D to 8F, for a password change, the mobile communication terminal asks the user to input an 'old password' (i.e., 'password before change') as shown in FIG. 8D, and a 'new password' (i.e., 'password after change') as shown in FIG. 8E. If the user inputs the 'old password' and 'new password', a confirmation screen is displayed as shown in FIG. 8F. When the user presses the 'OK' key in FIG. 8F, the mobile communication terminal creates a password change message containing the pre-stored 'authentication information', 'old password' and 'new password', and sends the password change message to a remote-controlled appliance (for example a DMB appliance).

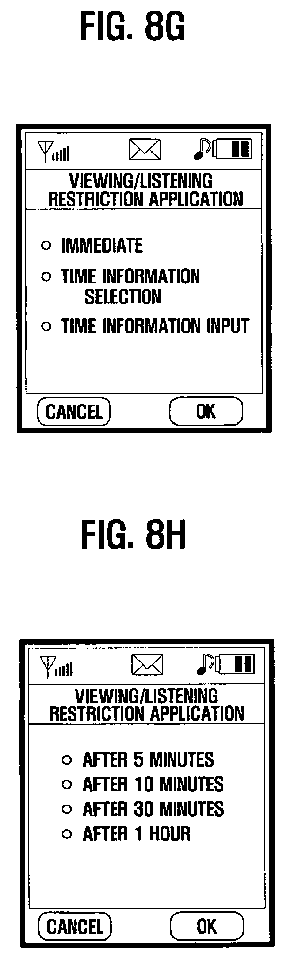

FIGS. 8G to 8J illustrate display screens of the mobile communication terminal after selection of the menu item of 'viewing/listening restriction application' in FIG. 8A to apply viewing/listening restriction to the remote-controlled appliance.

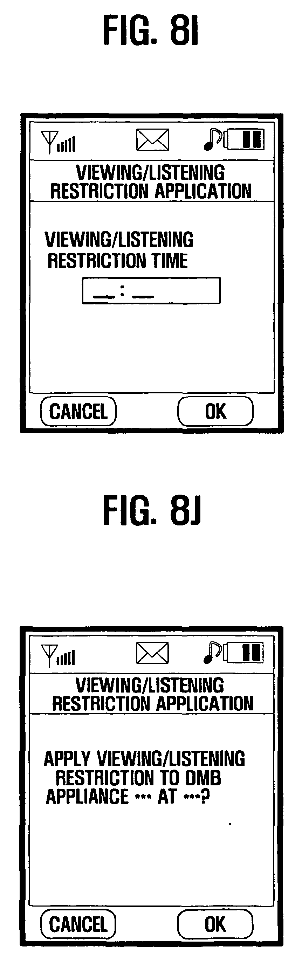

FIG. 8G illustrates methods for specifying an application time of viewing/listening restriction after selection of the menu item of 'viewing/listening restriction application' in FIG. 8A. FIG. 8H illustrates delay times in application of viewing/listening restriction after selection of a menu item 'time selection' in FIG. 8G. FIG. 8I illustrates a window for inputting an application time of viewing/listening restriction after selection of a menu item 'time input' in FIG. 8G. FIG. 8J illustrates a step to confirm selection of viewing/listening restriction application and associated application time as shown in FIGS. 8G to 8I. When the user presses the 'OK' key in FIG. 8J, the mobile communication terminal creates a viewing/listening restriction message containing the pre-stored 'authentication information' and the selected application time, and sends the viewing/listening restriction message to the remote-controlled appliance.

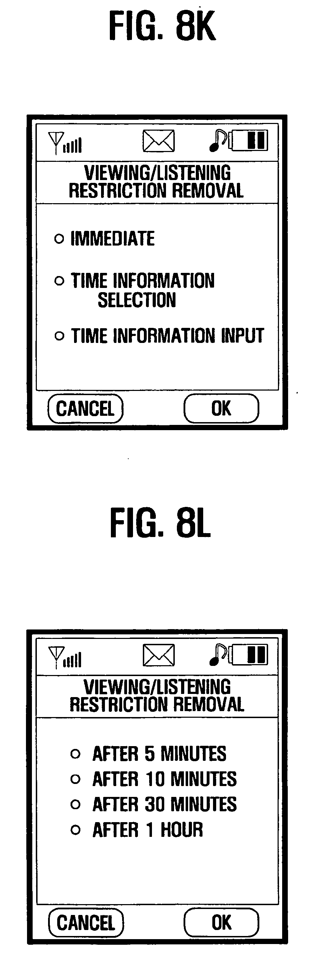

FIGS. 8K to 8N illustrate display screens of the mobile communication terminal after selection of the menu item of 'viewing/listening restriction removal' in FIG. 8A to remove viewing/listening restriction from the remote-controlled appliance.

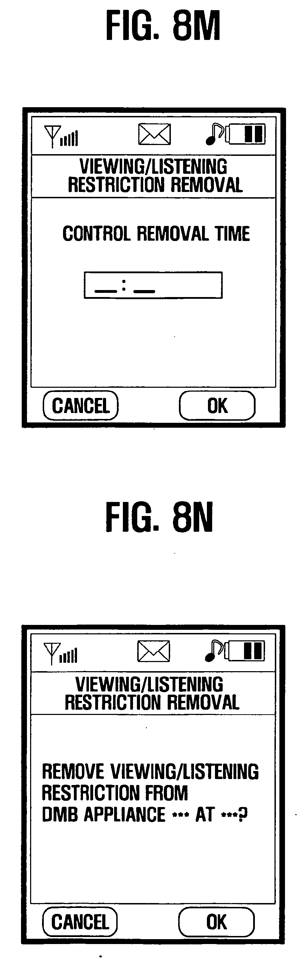

FIG. 8K illustrates methods for specifying a removal time of viewing/listening restriction after selection of the menu item of 'viewing/listening restriction removal' in FIG. 8A. FIG. 8L illustrates delay times in removal of viewing/listening restriction after selection of a menu item of 'time selection' in FIG. 8K. FIG. 8M illustrates a window for inputting a removal time of viewing/listening restriction after selection of a menu item of 'time input' in FIG. 8K. FIG. 8N illustrates a step to confirm selection of viewing/listening restriction removal and associated removal time as shown in FIGS. 8K to 8M. When the user presses the 'OK' key in FIG. 8N, the mobile communication terminal creates a viewing/listening restriction removal message containing the pre-stored 'authentication information' and the selected removal time, and sends the viewing/listening restriction removal message to the remote-controlled appliance.

As described above, the mobile communication terminal according to the present invention can remotely control broadcast operation of an external DMB appliance via a wireless communication network, thereby enabling application of appropriate viewing/listening restriction to a DMB appliance carried by a young person.

As apparent from the above description, the present invention provides a viewing/listening restriction apparatus and method for digital broadcasting. Viewing/listening restriction can be applied to a digital multimedia broadcasting (DMB) phone by blocking DMB operation of the DMB phone on the basis of preset conditions. DMB operation of the DMB phone is remotely controlled through a mobile communication network so that another person other than the user of the DMB phone can decide whether to block an operation of the DMB phone. Consequently, appropriate viewing/listening restriction can be applied to a DMB phone carried by a young person.

While preferred embodiments of the present invention have been shown and described in this specifcation, it will be understood by those skilled in the art that various changes or modifications of the embodiments are possible without departing from the scope of the invention as defined by the appended claims. For example, in the description, although a mobile communication terminal without a digital multimedia broadcasting (DMB) reception capability is used to remotely control a DMB appliance, the mobile communication terminal may have a DMB reception capability. Although the present invention is applied to a DMB receiver, it may also be applied to a receiver for any digital broadcasting, such as digital video broadcasting handheld (DVB-H), and MediaFLO.

## Claims

1. A viewing and listening restriction method for digital broadcast in a digital broadcast receiver (100), comprising the steps of:
a) receiving (S701), by the digital broadcast receiver (100), authentication information through a wireless communication network and registering the received authentication information;
b) setting viewing and listening restriction information (S727) for digital broadcast on the basis of selections by a restricting user authorized through the authentication information; and
c) applying viewing and listening restriction to the digital broadcast receiver (100) on the basis of the viewing and listening restriction information;
wherein step a) further includes:
a-1) receiving (S701), by the digital broadcast receiver (100), a text message including the authentication information through the wireless communication network;
a-2) requesting (S703) a restricted user to accept the authentication information; and
a-3) storing (S707) the authentication information according to user acceptance; and
wherein at step b) the digital broadcast receiver (100) receives (S721) user selection information including the authentication information through the wireless communication network.

2. The viewing and listening restriction method of claim 1, wherein at step a-1) the digital broadcast receiver (100) receives the text message from a mobile communication terminal remotely controlling the digital broadcast receiver (100).

3. The viewing and listening restriction method of claim 1, wherein at step b) time information is selected and set as the viewing and listening restriction information.

4. The viewing and listening restriction method of claim 3, wherein the time information is a time interval to wait before application of the viewing and listening restriction.

5. The viewing and listening restriction method of claim 4, wherein at step c) application of viewing and listening restriction is delayed by the time interval after setting the viewing and listening restriction information.

6. The viewing and listening restriction method of claim 3, wherein the time information is a specified start time of viewing and listening restriction.

7. The viewing and listening restriction method of claim 6, wherein at step c) viewing and listening restriction is applied at the specified time.

8. The viewing and listening restriction method of claim 1, further comprising:
d) setting viewing and listening restriction removal information (S737) for digital broadcast on the basis of selections by the restricting user authorized through the authentication information; and
e) removing viewing and listening restriction from the digital broadcast receiver (100) on the basis of the viewing and listening restriction removal information
, wherein at step d) the digital broadcast receiver (100) receives user selection information including the authentication information through the wireless communication network.

9. The viewing and listening restriction method of claim 8, wherein at step d) time information is selected and set as the viewing and listening restriction removal information.

10. The viewing and listening restriction method of claim 9, wherein the time information is a time interval to wait before removal of viewing and listening restriction.

11. The viewing and listening restriction method of claim 10, wherein at step e) removal of viewing and listening restriction is delayed by the time interval after setting the viewing and listening restriction removal information.

12. The viewing and listening restriction method of claim 9, wherein the time information is a specified start time of viewing and listening restriction removal.

13. The viewing and listening restriction method of claim 12, wherein at step e) viewing and listening restriction is removed at the specified time.

14. A digital broadcast receiver (100), comprising:
a wireless communication module (140) for receiving authentication information for setting viewing and listening restriction information for the digital broadcast receiver (100) via a wireless communication network;
a digital broadcast receiving unit (110) for receiving digital broadcast data;
a digital broadcast data processor (120) for processing the received digital broadcast data;
a digital broadcast data output unit (130) for outputting the processed digital broadcast data;
a keypad (180) for inputting an operation command from a user;
a controller (160) for setting viewing and listening restriction information for digital broadcast according to selections by a user authorized through the authentication information, and for applying viewing and listening restriction to the digital broadcast receiver (100) on the basis of the viewing and listening restriction information; and
a memory unit (170) for storing the authentication information and viewing and listening restriction information;
wherein the digital broadcast receiver (100) is arranged to implement the method steps of claim 1.

15. The digital broadcast receiver (100) of claim 14, wherein the wireless communication module (140) receives a text message including the authentication information and time information for application of viewing and listening restriction.

16. The digital broadcast receiver (100) of claim 15, wherein the time information is used for application of viewing and listening restriction to digital broadcast.

17. The digital broadcast receiver (100) of claim 16, wherein the time information is a time interval to wait before application of viewing and listening restriction.

18. The digital broadcast receiver (100) of claim 17, wherein the controller (160) sets the viewing and listening restriction information using the time information, waits for the duration of the time interval, and then applies viewing and listening restriction to digital broadcast.

19. The digital broadcast receiver (100) of claim 16, wherein the time information is a specified start time of viewing and listening restriction.

20. The digital broadcast receiver (100) of claim 19, wherein the controller (160) applies viewing and listening restriction at the specified time.

21. The digital broadcast receiver (100) of claim 14, wherein the wireless communication module (140) receives a text message including the authentication information through the wireless communication network.

22. The digital broadcast receiver (100) of claim 21, wherein the wireless communication module (140) receives the text message from a mobile communication terminal remotely controlling the digital broadcast receiver (100).

23. The digital broadcast receiver (100) of claim 14, wherein the receives a text message including the authentication information and time information for removal of viewing and listening restriction.

24. The digital broadcast receiver (100) of claim 23, wherein the time information is used to remove viewing and listening restriction for digital broadcast.

25. The digital broadcast receiver (100) of claim 24, wherein the time information is a time interval to wait before removal of viewing and listening restriction.

26. The digital broadcast receiver (100) of claim 25, wherein the controller (160) sets the viewing and listening restriction removal information using the time information, waits for the duration of the time interval, and then removes viewing and listening restriction for digital broadcast.

27. The digital broadcast receiver (100) of claim 24, wherein the time information is a specified start time of viewing and listening restriction removal.

28. The digital broadcast receiver (100) of claim 27, wherein the controller (160) removes viewing and listening restriction at the specified time.

## Patentansprüche

1. Verfahren zur Zuschau- und Zuhöreinschränkung für digitalen Rundfunk in einem digitalen Rundfunkempfänger (100), das die folgenden Schritte beinhaltet:
a) Empfangen (S701), mit dem digitalen Rundfunkempfänger (100), von Berechtigungsinformationen über ein drahtloses Kommunikationsnetz und Registrieren der empfangenen Berechtigungsinformationen;
b) Einstellen von Zuschau- und Zuhöreinschränkungsinformationen (S727) für digitalen Rundfunk auf der Basis der Wahl eines einschränkenden Benutzers, der aufgrund der Berechtigungsinformationen berechtigt ist; und
c) Anwenden der Zuschau- und Zuhöreinschränkung auf den digitalen Rundfunkempfänger (100) auf der Basis der Zuschau- und Zuhöreinschränkungsinformationen; wobei Schritt a) ferner Folgendes beinhaltet:
a-1) Empfangen (S701), durch den digitalen Rundfunkempfänger (100), einer die Berechtigungsinformationen enthaltenden Textnachricht über das drahtlose Kommunikationsnetz;
a-2) Verlangen (S703) von einem eingeschränkten Benutzer, die Berechtigungsinformationen zu akzeptieren; und
a-3) Speichern (S707) der Berechtigungsinformationen gemäß Benutzerakzeptanz; und
wobei in Schritt b) der digitale Rundfunkempfänger (100) Benutzerauswahlinformationen inklusive der Berechtigungsinformationen über das drahtlose Kommunikationsnetz empfängt (S721).

2. Verfahren zur Zuschau- und Zuhöreinschränkung nach Anspruch 1, wobei in Schritt a-1) der digitale Rundfunkempfänger (100) die Textnachricht von einem mobilen Kommunikationsendgerät empfängt, das den digitalen Rundfunkempfänger (100) fernsteuert.

3. Verfahren zur Zuschau- und Zuhöreinschränkung nach Anspruch 1, wobei in Schritt b) Zeitinformationen gewählt und als die Zuschau- und Zuhöreinschränkungsinformationen eingestellt werden.

4. Verfahren zur Zuschau- und Zuhöreinschränkung nach Anspruch 3, wobei die Zeitinformation ein vor dem Anwenden der Zuschau- und Zuhöreinschränkung abzuwartendes Zeitintervall ist.

5. Verfahren zur Zuschau- und Zuhöreinschränkung nach Anspruch 4, wobei in Schritt c) das Anwenden der Zuschau- und Zuhöreinschränkung um das Zeitintervall nach dem Einstellen der Zuschau- und Zuhöreinschränkungsinformationen verzögert wird.

6. Verfahren zur Zuschau- und Zuhöreinschränkung nach Anspruch 3, wobei die Zeitinformation eine vorgegebene Startzeit der Zuschau- und Zuhöreinschränkung ist.

7. Verfahren zur Zuschau- und Zuhöreinschränkung nach Anspruch 6, wobei in Schritt c) die Zuschau- und Zuhöreinschränkung zur vorgegebenen Zeit angewandt wird.

8. Verfahren zur Zuschau- und Zuhöreinschränkung nach Anspruch 1, das ferner Folgendes beinhaltet:
d) Einstellen von Zuschau- und Zuhöreinschränkung-Entfernungsinformationen (S737) für digitalen Rundfunk auf der Basis einer Wahl des einschränkenden Benutzers, der aufgrund der Berechtigungsinformationen berechtigt ist; und
e) Entfernen einer Zuschau- und Zuhöreinschränkung vom digitalen Rundfunkempfänger (100) auf der Basis der Zuschau- und Zuhöreinschränkung-Entfernungsinformationen,
wobei in Schritt d) der digitale Rundfunkempfänger (100) Benutzerauswahlinformationen inklusive der Berechtigungsinformationen über das drahtlose Kommunikationsnetz empfängt.

9. Verfahren zur Zuschau- und Zuhöreinschränkung nach Anspruch 8, wobei in Schritt d) Zeitinformationen gewählt und als die Zuschau- und Zuhöreinschränkung-Entfernungsinformationen eingestellt werden.

10. Verfahren zur Zuschau- und Zuhöreinschränkung nach Anspruch 9, wobei die Zeitinformation ein vor dem Entfernen der Zuschau- und Zuhöreinschränkung abzuwartendes Zeitintervall ist.

11. Verfahren zur Zuschau- und Zuhöreinschränkung nach Anspruch 10, wobei in Schritt e) das Entfernen der Zuschau- und Zuhöreinschränkung um das Zeitintervall nach dem Einstellen der Zuschau- und Zuhöreinschränkung-Entfernungsinformationen verzögert wird.

12. Verfahren zur Zuschau- und Zuhöreinschränkung nach Anspruch 9, wobei die Zeitinformation eine vorgegebene Startzeit des Entfernens der Zuschau- und Zuhöreinschränkung ist.

13. Verfahren zur Zuschau- und Zuhöreinschränkung nach Anspruch 12, wobei in Schritt e) die Zuschau- und Zuhöreinschränkung zur vorgegebenen Zeit entfernt wird.

14. Digitaler Rundfunkempfänger (100), der Folgendes umfasst:
ein drahtloses Kommunikationsmodul (140) zum Empfangen von Berechtigungsinformationen zum Einstellen von Zuschau- und Zuhöreinschränkungsinformationen für den digitalen Rundfunkempfänger (100) über ein drahtloses Kommunikationsnetz;
eine digitale Rundfunkempfangseinheit (110) zum Empfangen von digitalen Rundfunkdaten;
einen Digitale-Rundfunkdaten-Prozessor (120) zum Verarbeiten der empfangenen digitalen Rundfunkdaten;
eine Digitale-Rundfunkdaten-Ausgabeeinheit (130) zum Ausgeben der verarbeiteten digitalen Rundfunkdaten;
eine Tastatur (180) zum Eingeben eines Bedienbefehls von einem Benutzer;
eine Steuerung (160) zum Einstellen der Zuschau- und Zuhöreinschränkungsinformationen für digitalen Rundfunk gemäß einer Wahl eines Benutzers, der aufgrund der Berechtigungsinformationen berechtigt ist, und zum Anwenden eines Zuschau- und Zuhöreinschränkung auf den digitalen Rundfunkempfänger (100) auf der Basis der Zuschau- und Zuhöreinschränkungsinformationen; und
eine Speichereinheit (170) zum Speichern der Berechtigungsinformationen und der Zuschau- und Zuhöreinschränkungsinformationen;
wobei der digitale Rundfunkempfänger (100) so ausgelegt ist, dass er die Verfahrensschritte von Anspruch 1 ausführt.

15. Digitaler Rundfunkempfänger (100) nach Anspruch 14, wobei das drahtlose Kommunikationsmodul (140) eine Textnachricht empfängt, die die Berechtigungsinformationen und Zeitinformationen zum Anwenden der Zuschau - und Zuhöreinschränkung enthält.

16. Digitaler Rundfunkempfänger (100) nach Anspruch 15, wobei die Zeitinformation zum Anwenden einer Zuschau- und Zuhöreinschränkung auf digitalen Rundfunk verwendet wird.

17. Digitaler Rundfunkempfänger (100) nach Anspruch 16, wobei die Zeitinformation ein vor dem Anwenden der Zuschau- und Zuhöreinschränkung abzuwartendes Zeitintervall ist.

18. Digitaler Rundfunkempfänger (100) nach Anspruch 17, wobei die Steuerung (160) die Zuschau- und Zuhöreinschränkungsinformationen anhand der Zeitinformation einstellt, die Dauer des Zeitintervalls abwartet und dann die Zuschau- und Zuhöreinschränkung auf digitalen Rundfunk anwendet.

19. Digitaler Rundfunkempfänger (100) nach Anspruch 16, wobei die Zeitinformation eine vorgegebene Startzeit der Zuschau- und Zuhöreinschränkung ist.

20. Digitaler Rundfunkempfänger (100) nach Anspruch 19, wobei die Steuerung (160) die Zuschau- und Zuhöreinschränkung zur vorgegebenen Zeit anwendet.

21. Digitaler Rundfunkempfänger (100) nach Anspruch 14, wobei das drahtlose Kommunikationsmodul (140) eine die Berechtigungsinformationen enthaltende Textnachricht über das drahtlose Kommunikationsnetz empfängt.

22. Digitaler Rundfunkempfänger (100) nach Anspruch 21, wobei das drahtlose Kommunikationsmodul (140) die Textnachricht von einem mobilen Kommunikationsendgerät empfängt, das den digitalen Rundfunkempfänger (100) fernsteuert.

23. Digitaler Rundfunkempfänger (100) nach Anspruch 14, wobei das drahtlose Kommunikationsmodul (140) eine Textnachricht empfängt, die die Berechtigungsinformationen und Zeitinformationen zum Entfernen der Zuschau- und Zuhöreinschränkung enthält.

24. Digitaler Rundfunkempfänger (100) nach Anspruch 23, wobei die Zeitinformation zum Entfernen einer Zuschau- und Zuhöreinschränkung für digitalen Rundfunk verwendet wird.

25. Digitaler Rundfunkempfänger (100) nach Anspruch 24, wobei die Zeitinformation ein vor dem Entfernen der Zuschau- und Zuhöreinschränkung abzuwartendes Zeitintervall ist.

26. Digitaler Rundfunkempfänger (100) nach Anspruch 25, wobei die Steuerung (160) die Zuschau- und Zuhöreinschränkung-Entfemungsinformation anhand der Zeitinformation einstellt, die Dauer des Zeitintervalls abwartet und dann die Zuschau- und Zuhöreinschränkung für digitalen Rundfunk entfernt.

27. Digitaler Rundfunkempfänger (100) nach Anspruch 24, wobei die Zeitinformation eine vorgegebene Startzeit der Zuschau- und Zuhöreinschränkungsentfernung ist.

28. Digitaler Rundfunkempfänger (100) nach Anspruch 27, wobei die Steuerung (160) die Zuschau- und Zuhöreinschränkung zur vorgegebenen Zeit entfernt.

## Revendications

1. Procédé destiné à restreindre l'affichage et l'écoute d'une diffusion numérique dans un récepteur de diffusion numérique (100), comprenant les étapes consistant à :
a) assurer la réception (S701), par le récepteur de diffusion numérique (100), d'informations d'authentification par l'intermédiaire d'un réseau de communications sans fil et l'enregistrement des informations d'authentification ayant été reçues ;
b) établir des informations de restriction de l'affichage et de l'écoute (S727) pour des diffusions numériques sur la base de sélections faites par un utilisateur imposant des restrictions lequel est autorisé en vertu des informations d'authentification ; et
c) appliquer une restriction de l'affichage et de l'écoute au récepteur de diffusion numérique (100) sur la base des informations de restriction de l'affichage et de l'écoute ;
cas dans lequel l'étape a) englobe en outre les opérations consistant à :
a-1) assurer la réception (S701), par le récepteur de diffusion numérique (100), d'un message texte incluant les informations d'authentification par l'intermédiaire du réseau de communications sans fil ;
a-2) demander (S703) à un utilisateur soumis à des restrictions d'accepter les informations d'authentification ; et
a-3) stocker (S707) les informations d'authentification en fonction de l'acceptation de l'utilisateur ; et
cas dans lequel, au niveau de l'étape b), le récepteur de diffusion numérique (100) reçoit (S721) des informations de sélection Utilisateur, incluant les informations d'authentification, par l'intermédiaire du réseau de communications sans fil.

2. Procédé de restriction de l'affichage et de l'écoute selon la revendication 1, au niveau de l'étape a-1) le récepteur de diffusion numérique (100) recevant le message texte à partir d'un terminal de communications mobile lequel commande à distance le récepteur de diffusion numérique (100).

3. Procédé de restriction de l'affichage et de l'écoute selon la revendication 1, au niveau de l'étape b) des informations temporelles étant sélectionnées et établies en tant qu'informations de restriction de l'affichage et de l'écoute.

4. Procédé de restriction de l'affichage et de l'écoute selon la revendication 3, les informations temporelles se présentant sous la forme d'un intervalle de temps d'attente avant l'application de la restriction de l'affichage et de l'écoute.

5. Procédé de restriction de l'affichage et de l'écoute selon la revendication 4, au niveau de l'étape c) l'application d'une restriction de l'affichage et de l'écoute étant retardée par l'intervalle de temps après l'établissement des informations de restriction de l'affichage et de l'écoute.

6. Procédé de restriction de l'affichage et de l'écoute selon la revendication 3, les informations temporelles se présentant sous la forme d'un horaire de commencement spécifié pour une restriction de l'affichage et de l'écoute.

7. Procédé de restriction de l'affichage et de l'écoute selon la revendication 6, au niveau de l'étape c) une restriction de l'affichage et de l'écoute étant appliquée lors de l'horaire spécifié.

8. Procédé de restriction de l'affichage et de l'écoute selon la revendication 1, comprenant en outre les opérations consistant à :
d) établir des informations de suppression de la restriction de l'affichage et de l'écoute (S737) pour des diffusions numériques sur la base de sélections faites par l'utilisateur imposant des restrictions lequel est autorisé en vertu des informations d'authentification ; et
e) supprimer une restriction de l'affichage et de l'écoute au niveau du récepteur de diffusion numérique (100) sur la base des informations de suppression de la restriction de l'affichage et de l'écoute, cas dans lequel au niveau de l'étape d), le récepteur de diffusion numérique (100) reçoit des informations de sélection Utilisateur, incluant des informations d'authentification, par l'intermédiaire du réseau de communications sans fil.

9. Procédé de restriction de l'affichage et de l'écoute selon la revendication 8, au niveau de l'étape d) des informations temporelles étant sélectionnées et établies en tant qu'informations de suppression de la restriction de l'affichage et de l'écoute.

10. Procédé de restriction de l'affichage et de l'écoute selon la revendication 9, les informations temporelles se présentant sous la forme d'un intervalle de temps d'attente avant la suppression d'une restriction de l'affichage et de l'écoute.

11. Procédé de restriction de l'affichage et de l'écoute selon la revendication 10, au niveau de l'étape e) la suppression d'une restriction de l'affichage et de l'écoute étant retardée par l'intervalle de temps après l'établissement des informations de suppression de la restriction de l'affichage et de l'écoute.

12. Procédé de restriction de l'affichage et de l'écoute selon la revendication 9, les informations temporelles se présentant sous la forme d'un horaire de commencement spécifié pour la suppression d'une restriction de l'affichage et de l'écoute.

13. Procédé de restriction de l'affichage et de l'écoute selon la revendication 12, au niveau de l'étape e) la restriction de l'affichage et de l'écoute étant supprimée lors de l'horaire spécifié.

14. Récepteur de diffusion numérique (100), comprenant :
un module de communications sans fil (140) pour recevoir des informations d'authentification destinées à établir des informations de restriction de l'affichage et de l'écoute sur le récepteur de diffusion numérique (100) par l'intermédiaire d'un réseau de communications sans fil ;
une unité de réception de diffusion numérique (110) pour recevoir des données de diffusion numériques ;
un processeur de données de diffusion numériques (120) pour traiter les données de diffusion numériques ayant été reçues ;
une unité de sortie de données de diffusion numériques (130) pour produire les données de diffusion numériques ayant été traitées ;
un clavier (180) pour permettre à un utilisateur de saisir une instruction de fonctionnement ;
un contrôleur (160) pour établir des informations de restriction de l'affichage et de l'écoute pour des diffusions numériques en fonction de sélections faites par un utilisateur autorisé en vertu des informations d'authentification, et pour appliquer une restriction de l'affichage et de l'écoute au récepteur de diffusion numérique (100) sur la base des informations de restriction de l'affichage et de l'écoute ; et
une unité à mémoire (170) pour stocker les informations d'authentification ainsi que les informations de restriction de l'affichage et de l'écoute ;
cas dans lequel le récepteur de diffusion numérique (100) est agencé de façon à mettre en oeuvre les étapes du procédé selon la revendication 1.

15. Récepteur de diffusion numérique (100) selon la revendication 14, le module de communications sans fil (140) recevant un message texte incluant les informations d'authentification et des informations temporelles en vue de l'application d'une restriction de l'affichage et de l'écoute.

16. Récepteur de diffusion numérique (100) selon la revendication 15, les informations temporelles étant utilisées pour l'application, à des diffusions numériques, d'une restriction de l'affichage et de l'écoute.

17. Récepteur de diffusion numérique (100) selon la revendication 16, les informations temporelles se présentant sous la forme d'un intervalle temps d'attente avant l'application d'une restriction de l'affichage et de l'écoute.

18. Récepteur de diffusion numérique (100) selon la revendication 17, le contrôleur (160) établissant les informations de restriction de l'affichage et de l'écoute grâce à l'utilisation des informations temporelles, se mettant en attente pendant la durée de l'intervalle de temps, et appliquant ensuite aux diffusions numériques une restriction de l'affichage et de l'écoute.

19. Récepteur de diffusion numérique (100) selon la revendication 16, les informations temporelles se présentant sous la forme d'un horaire de commencement spécifié pour une restriction de l'affichage et de l'écoute.

20. Récepteur de diffusion numérique (100) selon la revendication 19, le contrôleur (160) appliquant une restriction de l'affichage et de l'écoute lors de l'horaire spécifié.

21. Récepteur de diffusion numérique (100) selon la revendication 14, le module de communications sans fil (140) recevant un message texte, incluant les informations d'authentification, par l'intermédiaire du réseau de communications sans fil.

22. Récepteur de diffusion numérique (100) selon la revendication 21, le module de communications sans fil (140) recevant le message texte à partir d'un terminal de communications mobile lequel commande à distance le récepteur de diffusion numérique (100).

23. Récepteur de diffusion numérique (100) selon la revendication 14, le module de communications sans fil (140) recevant un message texte, incluant les informations d'authentification, et des informations temporelles pour la suppression d'une restriction de l'affichage et de l'écoute.

24. Récepteur de diffusion numérique (100) selon la revendication 23, les informations temporelles étant utilisées pour supprimer une restriction de l'affichage et de l'écoute sur des diffusions numériques.

25. Récepteur de diffusion numérique (100) selon la revendication 24, les informations temporelles se présentant sous la forme d'un intervalle de temps d'attente avant la suppression d'une restriction de l'affichage et de l'écoute.

26. Récepteur de diffusion numérique (100) selon la revendication 25, le contrôleur (160) établissant les informations de suppression de la restriction de l'affichage et de l'écoute grâce à l'utilisation des informations temporelles, se mettant en attente pendant la durée de l'intervalle de temps, et supprimant ensuite une restriction de l'affichage et de l'écoute pour des diffusions numériques.

27. Récepteur de diffusion numérique (100) selon la revendication 24, les informations temporelles se présentant sous la forme d'un horaire de commencement spécifié pour la suppression d'une restriction de l'affichage et de l'écoute.

28. Récepteur de diffusion numérique (100) selon la revendication 27, le contrôleur (160) supprimant une restriction de l'affichage et de l'écoute lors de l'horaire spécifié.
